# EUROPEAN PATENT SPECIFICATION

(11) **EP 4 027 046 B1**
(45) Date of publication and mention of the grant of the patent: **28.12.2022**
(21) Application number: 22150052.3
(22) Date of filing: 03.01.2022
(51) Int. Cl.: F16L 25/00, H02G 3/06

(54) **CORRUGATED-TUBE PROTECTIVE MEMBER**
WELLROHRSCHUTZELEMENT
ÉLÉMENT DE PROTECTION DE TUYAU ONDULÉ

(30) Priority: 07.01.2021 JP 2021001214
(43) Date of publication of application: 13.07.2022
(73) Proprietor: Yazaki Corporation, Minato-ku Tokyo 108-8333 (JP)
(72) Inventor: Takagi, Ayumu, Toyota-shi, Aichi (JP); Nomoto, Takashi, Toyota-shi, Aichi (JP); Yoshimura, Katsuya, Toyota-shi, Aichi (JP)
(74) Representative: Grünecker Patent- und Rechtsanwälte PartG mbB

(56) References cited:
- DE-U1- 20 219 220
- FR-A1- 2 655 126
- KR-A- 20180 029 499
- US-A1- 2019 123 531

## Description

### TECHNICAL FIELD

The present invention relates to a corrugated-tube protective member.

### BACKGROUND

Conventionally, a corrugated-tube protective member having a tubular portion as a tubular main body disposed on the inner circumference of an end part of a corrugated tube having a plurality of ridge portions disposed along a longitudinal direction is known (see JP 2019 -75946 A).

In the corrugated-tube protective member, a rib configured to be arranged inside the corrugated tube and configured to engage with the ridge portion at an inside of the ridge portion in a direction of removal of the main body with respect to the corrugated tube is formed on an outer circumference of the tubular portion. On the outer circumference at an end part in a longitudinal direction of the tubular portion, an outlet flange as a stopper whose outer diameter is set equal to or larger than an outer diameter of the ridge portion and which is arranged so as to face an end surface in the longitudinal direction of the corrugated tube in an insertion direction of the main body into the corrugated tube is inserted is provided.

In such a corrugated-tube protective member, the rib engages with the ridge portion at an inside of the ridge portion and prevents the corrugated-tube protective member from coming off from the corrugated tube. Further, by arranging the outlet flange and the end surface of the corrugated tube to face each other, an excessive insertion of the corrugated-tube protective member into the corrugated tube is prevented.

### SUMMARY

In the conventional corrugated-tube protective member, an interval between the stopper and the rib is set to be equal to an interval between inner ribs of a protector in which the corrugated tube is arranged. The interval between the inner ribs is set shorter than that between the engaged surfaces to be engaged with the ribs of the adjacent ridge portions. Therefore, in the conventional corrugated-tube protective member, the interval between the stopper and the rib is shorter than the interval between the engaged surfaces to be engaged with the ribs of the adjacent ridge portions.

If the interval between the stopper and the rib is made shorter than that between the engaged surfaces to be engaged with the ribs of the adjacent ridge portions, the ridge portions and the ribs may not be engaged inside the ridge portions depending on a cut shape at the end part of the corrugated tube. More specifically, depending on the cut shape of the end part of the corrugated tube, when the stopper and the end surface of the corrugated tube are brought into contact with each other, the engaged surface of the ridge portion to be engaged with the rib may not exist in the ridge portion. When the ridge portion and the rib cannot be engaged, the corrugated-tube protective member may come off from the corrugated tube.

From document FR 2655126 A1 it is known a corrugated-tube protective member which has a tubular shape and which comprises a stopper on an outer circumferential end part in the longitudinal direction of the main body.

Document KA 20180029499 A discloses a corrugated-tube protective member which has one rib on an outer circumferential portion thereof. Furthermore, a stopper is provided on a main body of the corrugated-tube protective member. The rib is a kind of screw portion which is wound around the outer circumference of the main body.

Document DE 202 19 220 U1 discloses a corrugated-tube protective member which has a main body and a plurality of ribs disposed on an outer circumference of the main body. In addition to this, a stopper is provided on an outer circumference of an end part in a longitudinal direction of the main body. An interval between the stopper and one rib which is adjacent to the stopper is set to be equal to an interval between engageable surfaces on the ridge portions adjacent to each other.

An object of the present invention is directed to providing a corrugated-tube protective member configured to engage a ridge portion and a rib stably.

The object is solved by a corrugated-tube protective member according to claim 1.

A surface of the rib on a front side of the insertion direction side may be an inclined surface.

At least one portion in the circumferential direction of the main body may be provided with a dividing portion configured to divide the main body in the circumferential direction.

According to the above configuration, a corrugated-tube protective member capable of stably engaging the ridge portion and a rib is provided.

### BRIEF DESCRIPTION OF THE DRAWINGS

FIG. 1 is a side view of a corrugated-tube protective member according to one or more embodiments;
FIG. 2 is a detail cross-sectional view of the corrugated-tube protective member being assembled to a corrugated tube;
FIG. 3 is a detail view of FIG. 2;
FIG. 4 is a side view of the corrugated-tube protective member being attached to the corrugated tube; and
FIG. 5 is a side view of the corrugated-tube protective member being attached to a corrugated tube having a different cut surface.

### DETAILED DESCRIPTION

Various embodiments will be described hereinafter with reference to the accompanying drawings.

Hereinafter, a corrugated-tube protective member according to one or more embodiments will be described in detail with reference to the drawings. The dimensional ratio of the drawings may differ from the actual ratio.

The corrugated-tube protective member 1 according to one or more embodiments includes a tubular main body 7 arranged at an inner circumference of an end part of the corrugated tube 5 having a plurality of ridge portions 3 disposed along the longitudinal direction.

A rib 9 is provided on an outer circumference of the main body 7 and is configured to be disposed inside the corrugated tube 5 and configured to be engaged with the ridge portion 3 at an inside of the ridge portion in a direction of removal of the main body 7 with respect to the corrugated tube 5..

Further, a stopper 11 on an outer circumference of an end part in a longitudinal direction of the main body 7 has an outer diameter set to be equal to or larger than an outer diameter of the ridge portion 3 and is configured to be arranged to face an end surface in the longitudinal direction of the corrugated tube 5 in an insertion direction of the main body 7 into the corrugated tube 5.

A interval L1 between the stopper 11 and the rib 9 is set to be equal to or larger than an interval L2 between engaged surfaces 13 on the ridge portions 3 adjacent to each other. Here, the engaged surface 13 is a surface configured to engage with the rib 9.

In some embodiments, the interval L1 between the stopper 11 and the rib 9 may be set to be equal to the interval L2 between the engaged surfaces 13 on the ridge portions 3 adjacent to each other.

Further, a surface of the rib 9 on a front side of the insertion direction of the main body 7 into the corrugated tube 5 is an inclined surface 15.

A plurality of the ribs 9 are disposed along the length direction of the main body 7.

Further, at least one portion in a circumferential direction of the main body 7 is provided with a dividing portion 17 configured to divide the main body 7 in the circumferential direction.

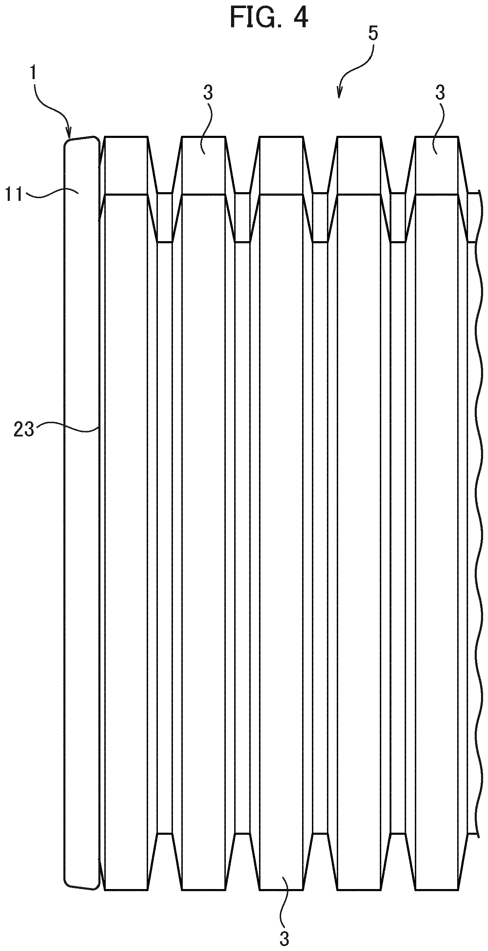

As illustrated in FIG. 4, the corrugated tube 5 has a plurality of ridge portions 3 disposed along the longitudinal direction. The corrugated tube 5 is flexible. The corrugated tube 5 prevent interference between an electric wire (not illustrated) and a peripheral member in a state that the electric wire for electrically connecting a power source and an apparatus mounted on a vehicle is inserted through the corrugated tube 5, for example.

In the corrugated tube 5, a slit (not illustrated) into which an electric wire can be inserted is formed along the longitudinal direction of the corrugated tube 5. By forming the slit as described above, the corrugated tube 5 can be attached to an intermediate portion of the electric wire even in a state the electric wire is routed in a vehicle.

When an external force is applied to the corrugated tube 5 from the outside in the radial direction, the corrugated tube 5 may be deformed so as to collapse toward the inside. In particular, if deformation occurs at the end part of the corrugated tube 5, the corrugated tube 5 may not be attached to a mounting member such as a protector on which an electric wire is routed. Therefore, the corrugated-tube protective member 1 is arranged at the inner circumference of the end part of the corrugated tube 5.

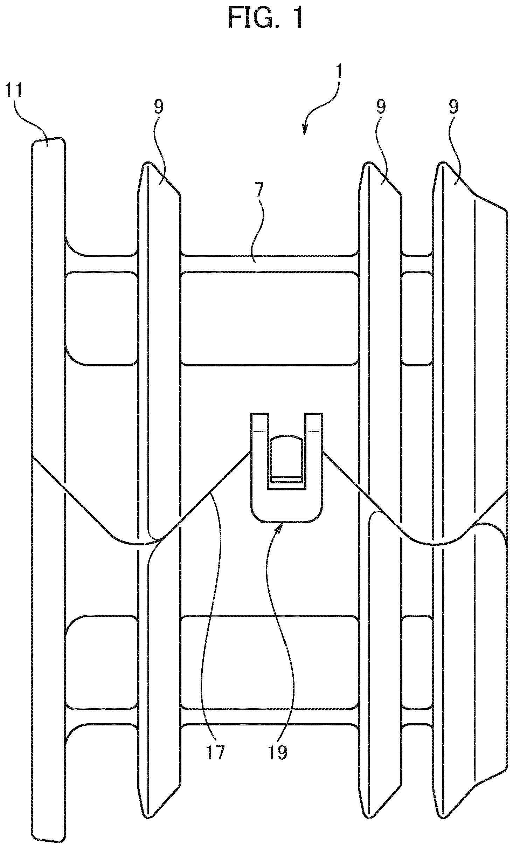

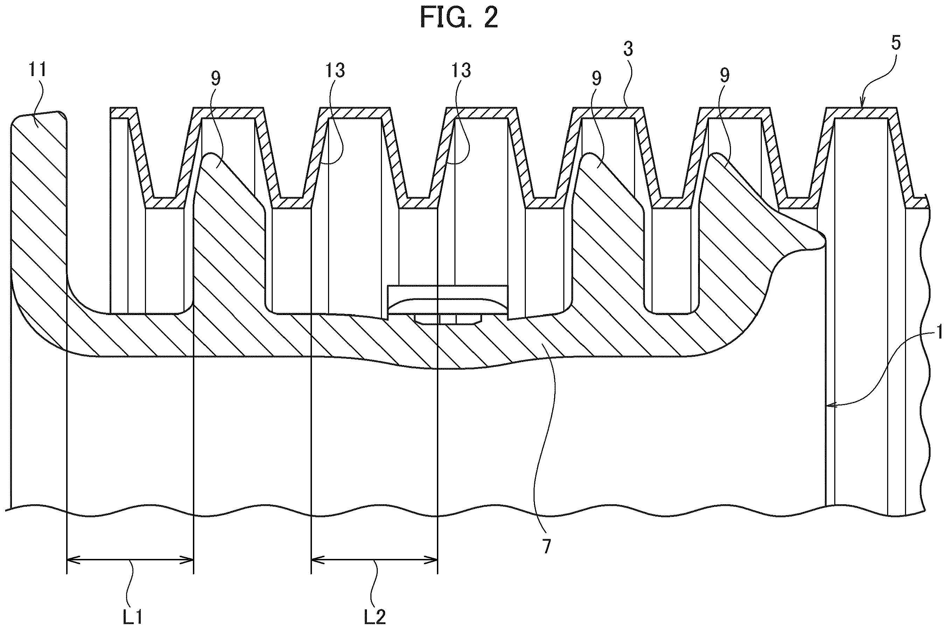

As illustrated in FIGS. 1 to 3, the corrugated-tube protective member 1 is made of an insulating material such as synthetic resin having rigidity higher than rigidity of the corrugated tube 5. The corrugated-tube protective member 1 includes a main body 7, a rib 9, and a stopper 11.

The main body 7 is formed into a tubular shape having an outer diameter smaller than an inner diameter of the corrugated tube 5 and configured to be inserted into the corrugated tube 5. The main body 7 is divided in the circumferential direction by one dividing portion 17 in the circumferential direction, and a part opposed to the dividing portion 17 in the radial direction is connected via a hinge (not illustrated) so as the main body 7 to open and close.

By providing the dividing portion 17 to the main body 7 as described above, the corrugated-tube protective member 1 can be attached to the intermediate portion of the electric wire even in a state the electric wire is routed in the vehicle. The main body 7 is held in a state where the dividing portion 17 is engaged through a locking part 19. The rib 9 and the stopper 11 are provided on the outer circumference of the main body 7.

The rib 9 is provided on the outer circumference of the main body 7 continuous in the circumferential direction of the main body 7 and protrudes from the outer circumferential surface of the main body 7 toward the outside. The rib 9 and the main body 7 are formed as a single member being continuous with each other. An outer diameter of the rib 9 is set smaller than the outer diameter of the ridge portion 3 of the corrugated tube 5.

The rib 9 is disposed inside the ridge portion 3 in a state the main body 7 is inserted into the inner circumference of the end part of the corrugated tube 5.

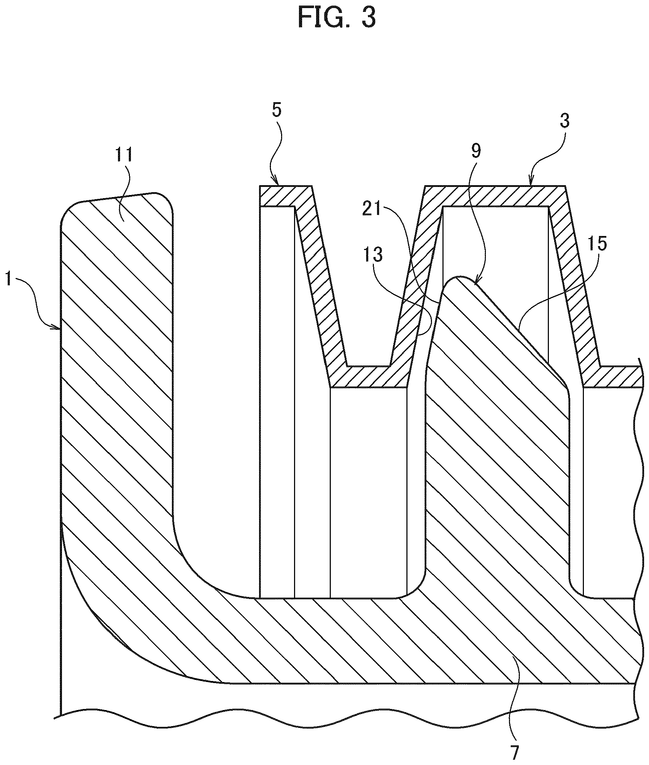

The surface of the rib 9 on the direction of removal of the main body 7 with respect to the corrugated tube 5 (a left side surface of the rib 9 illustrated in FIG. 3) is an engaging surface 21, the engaging surface 21 formed substantially perpendicular to the outer circumferential surface of the main body 7. The engaging surface 21 is configured to engage with the engaged surface 13 facing the engaging surface 21 on the inner circumference of the ridge portion 3 inside the ridge portion 3.

The main body 7 is prevented from coming off the corrugated tube 5 by the engagement of the engaging surface 21 and the engaged surface 13. A plurality of ribs 9 (three ribs in this embodiment) are provided along the longitudinal direction of the main body 7. By providing a plurality of ribs 9 as described above, a plurality of engagement portions between the engaging surface 21 and the engaged surface 13 can be obtained, and the corrugated-tube protective member 1 can be stably held on the corrugated tube 5.

The surface of the rib 9 in the insertion direction of the main body 7 into the corrugated tube 5 (a right side surface of the rib 9 illustrated in FIG. 3) is an inclined surface 15 inclined upward from the front side in the insertion direction toward the rear side in the insertion direction with respect to the outer circumferential surface of the main body 7. That is, the inclined surface 15 is inclined so as to increase the outer diameter of the corrugated-tube protective member 1 from the front side toward the rear side in the insertion direction. By providing the inclined surface 15 on the rib 9 as described above, the main body 7 can be stably inserted into the corrugated tube 5, and the assemblability of the corrugated-tube protective member 1 to the corrugated tube 5 can be improved.

The stopper 11 is provided on the outer circumference of the end part of the main body 7 continuous in the circumferential direction of the main body 7 and protrudes from the outer circumferential surface of the main body 7 toward the outside. The stopper 11 and the main body 7 are formed as a single member being continuous with each other. An outer diameter of the stopper 11 is set equal to or larger than the outer diameter of the ridge portion 3 of the corrugated tube 5. In some embodiments, the outer diameter of the stopper 11 is set equal to an outer diameter of the ridge portion 3 of the corrugated tube 5.

The stopper 11 is exposed from the corrugated tube 5 in a state that the main body 7 is inserted into the inner circumference of the end part of the corrugated tube 5, and is arranged to face the end surface in the longitudinal direction of the corrugated tube 5.

By arranging the stopper 11 in a manner described above, the stopper 11 abuts the end surface of the corrugated tube 5, when the main body 7 is to be excessively inserted into the corrugated tube 5. The main body 7 can be prevented from being excessively inserted into the corrugated tube 5 by abutting the stopper 11 with the end surface of the corrugated tube 5.

If the interval L1 between the stopper 11 and the rib 9 adjacent to the stopper 11 is shorter than the interval L2 between the engaged surfaces 13 on the ridge portions 3 adjacent to each other, the engaged surfaces 13 to be engaged with the ribs 9, the rib 9 and the ridge portion 3 may not be engaged depending on the cut shape of the end part of the corrugated tube 5.

More specifically, the corrugated tube 5 may be cut at the end part of the corrugated tube 5 so that the engaged surface 13 is eliminated at the top of the ridge portion 3. With such a cut shape, even if the stopper 11 and the end surface of the corrugated tube 5 abut against each other, since the interval L1 between the stopper 11 and the rib 9 is short, the engaged surface 13 of the ridge portion 3 may not be positioned on the engaging surface 21 of the rib 9.

Therefore, the interval L1 between the stopper 11 and the rib 9 adjacent to the stopper 11 is set to be an interval equal to or larger than the interval L2 between the engaged surfaces 13 on the ridge portions 3 adjacent to each other so as to be engaged with the ribs 9. By setting the interval L1 between the stopper 11 and the rib 9 as described above, it is possible to arrange the engaged surface 13 of the ridge portion 3 on the engagement surface 21 of the rib 9 regardless of the cut shape of the corrugated tube 5.

For example, as illustrated in FIG. 4, the cut surface 23 at the end of the corrugated tube 5 may be cut straight in the radial direction so as to eliminate the engaged surface 13 at the top of the ridge portion 3. Even with such a cut surface 23, the cut surface 23 can be arranged between the stopper 11 and the rib 9, and the engaged surface 13 of the ridge portion 3 can be engaged onto the engaging surface 21 of the rib 9.

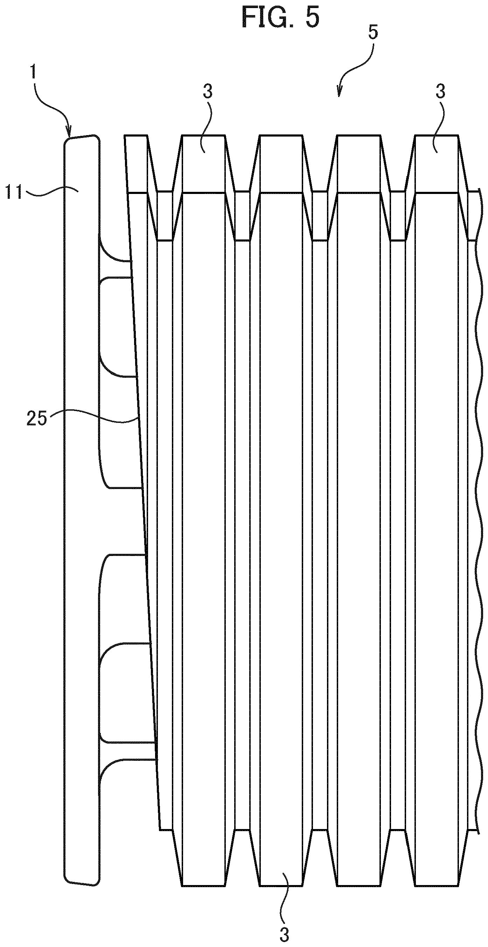

Further, as illustrated in FIG. 5, the cut surface 25 at the end of the corrugated tube 5 may be cut between the adjacent engaged surfaces 13 so as to eliminate the engaged surface 13 at the top of the ridge portion 3. Even with such a cut surface 25, the cut surface 25 can be arranged between the stopper 11 and the rib 9, and the engaged surface 13 of the ridge portion 3 can be engaged onto the engaging surface 21 of the rib 9.

By setting the interval L1 between the stopper 11 and the rib 9 to be an interval equal to or larger than the interval L2 between the engaged surfaces 13, the engaged surface 13 of the ridge portion 3 can be engaged to the engaged surface 21 of the rib 9 regardless of the cut shape of the corrugated tube 5. Thus, the engaging surface 21 of the rib 9 and the engaged surface 13 of the ridge portion 3 can be securely engaged, and the corrugated-tube protective member 1 can be stably held on the corrugated tube 5.

Here, as the interval L1 between the stopper 11 and the rib 9 is larger than the interval L2 between the engaged surfaces 13 of the ridge portion 3 adjacent to each other to be engaged with the ribs 9, the engaged surface 13 on the ridge portion 3 can be engaged to the engaging surface 21 of the rib 9. However, when the interval L1 between the stopper 11 and the rib 9 is wide, the main body 7 may be elongated in the longitudinal direction, and the corrugated-tube protective member 1 may be enlarged.

Therefore, the interval L1 between the stopper 11 and the rib 9 adjacent to the stopper 11 is set equal to the interval L2 between the engaged surfaces 13 of the ridge portion 3 adjacent to each other to be engaged with the ribs 9. By setting interval L1 between the stopper 11 and the rib 9 as described above, the engaged surface 13 of the ridge portion 3 is configured to engage with the engaging surface 21 of the rib 9 at a minimum required interval. Therefore, an elongation of the main body 7 in the longitudinal direction may be prevented, and an upsizing of the corrugated-tube protective member 1 may be prevented.

In the corrugated-tube protective member 1, the interval L1 between the stopper 11 and the rib 9 is set to be equal or larger than the interval L2 between the engaged surfaces 13 of the ridge portion 3 adjacent to each other to be engaged with the ribs 9. Therefore, regardless of the cut shape of the corrugated tube 5, the engaged surface 13 of the ridge portion 3 can be engaged to the rib 9.

Therefore, the corrugated-tube protective member 1 according to one or more embodiments stably engages the ridge portion 3 and the rib 9.

Further, in some embodiments, the interval L1 between the stopper 11 and the rib 9 is set equal to the interval L2 between the engaged surfaces 13 of the ridge portion 3 adjacent to each other to be engaged with the ribs 9. Therefore, the engaged surface 13 of the ridge portion 3 can be arranged with respect to the rib 9 at a necessary minimum interval, and an upsizing of the corrugated-tube protective member 1 can be prevented.

Further, a surface of the rib 9 on front side in the insertion direction of the main body 7 to the corrugated tube 5 is formed by an inclined surface 15. Therefore, the main body 7 can be stably inserted into the corrugated tube 5, and the assemblability of the corrugated-tube protective member 1 to the corrugated tube 5 can be improved.

A plurality of ribs 9 are disposed along the longitudinal direction of the main body 7. Thus, a plurality of engagement portions between the ribs 9 and the ridge portions 3 can be obtained, and the corrugated-tube protective member 1 can be stably held on the corrugated tube 5.

Further, at least one portion in the circumferential direction of the main body 7 is provided with the dividing portion 17 configured to divide the main body 7 in the circumferential direction. Therefore, the main body 7 can be assembled to the intermediate portion of the electric wire, and the assemblability of the corrugated-tube protective member 1 to the electric wire can be improved.

Although the present embodiment has been described above, the present embodiment is not limited thereto, and various modifications can be made within the scope of the appended claims.

For example, in the present embodiment, three ribs are provided on the main body, but the present invention is not limited thereto, and two or four or more ribs may be provided on the main body.

The dividing portion is provided at one position in the circumferential direction of the main body, and the main body is formed to open and close via a hinge, but the present invention is not limited thereto, and for example, the dividing portion may be provided at two positions in the circumferential direction of the main body, and the main body divided into two may be assembled and form the main body.

## Claims

1. A corrugated-tube protective member (1) comprising:
a main body (7) with tubular shape configured to be arranged at an inner circumference of an end part of a corrugated tube (5), the corrugated tube (5) having a plurality of ridge portions (3) disposed along a longitudinal direction of the corrugated tube (5);
at least one rib (9) on an outer circumference of the main body (7) configured to be arranged inside the corrugated tube (5) and configured to engage with corresponding ridge portion (3) of the plurality of ridge portions (3) at an inside of the corresponding ridge portion (3) in a direction of removal of the main body (7) with respect to the corrugated tube (5); and
a stopper (11) on an outer circumference of an end part in a longitudinal direction of the main body (7) having an outer diameter set to be equal to or larger than an outer diameter of the ridge portion (3) and configured to be arranged to face an end surface in the longitudinal direction of the corrugated tube (5) in an insertion direction of the main body (7) into the corrugated tube (5), wherein
an interval (L1) between the stopper (11) and one rib (9) which is adjacent to the stopper is set to be larger than an interval (L2) between engageable surfaces (13) on the ridge portions (3) adjacent to each other, the engageable surface (13) being a surface configured to engage with the rib (9),
wherein a plurality of the ribs (9) are disposed along the longitudinal direction of the main body (7).

2. The corrugated-tube protective member (1) according to claim 1, wherein
a surface of the rib (9) on a front side of the insertion direction is an inclined surface (15).

3. The corrugated-tube protective member (1) according to claim 1 or 2, wherein
at least one portion in a circumferential direction of the main body (7) is provided with a dividing portion (17) configured to divide the main body (7) in the circumferential direction.

## Patentansprüche

1. Ein Wellrohrschutzelement (1), aufweisend:
einen Hauptkörper (7) mit Rohrgestalt der konfiguriert ist, um an einem inneren Umfang von einem Endteil eines Wellrohrs (5) angeordnet zu werden, das Wellrohr (5) eine Vielzahl von Kantenabschnitten (3) hat, vorgesehen entlang einer Längsrichtung des Wellrohrs (5), zumindest eine Rippe (9) an einem Außenumfang des Hauptkörpers (7) konfiguriert ist, um innerhalb des Wellrohrs (5) angeordnet zu sein und konfiguriert ist, um mit entsprechendem Kantenabschnitt (3) der Vielzahl von Kantenabschnitten (3) an einer Innenseite des entsprechen Kantenabschnitts (3) in einer Richtung der Entnahme des Hauptkörpers (7) in Bezug zu dem Wellrohr (5) einzugreifen, und ein Stopper (11) an einem Außenumfang von einem Endteil in einer Längsrichtung des Hauptkörpers (7) einen äußeren Durchmesser hat, der gleichgesetzt ist oder größer ist als ein Außendurchmesser des Kantenabschnitts (3) und der konfiguriert ist um angeordnet zu sein, um gegenüber einer Endoberfläche in der Längsrichtung des Wellrohrs (5) in einer Einsetzrichtung des Hauptkörpers (7) in das Wellrohr (5) zu sein, wobei ein Intervall (L1) zwischen dem Stopper (11) und einer Rippe (9), die neben dem Stopper ist, größer ist als ein Intervall (L2) zwischen eingreifenden Flächen (13) an den Kantenabschnitten (3) angrenzend zueinander, die eingreifende Fläche (13) ist eine Fläche die konfiguriert ist, um mit der Rippe (9) einzugreifen, wobei eine Vielzahl der Rippen (9) entlang der Längsrichtung des Hauptkörpers (7) vorgesehen sind.

2. Das Wellrohrschutzelement (1) gemäß Anspruch 1, wobei eine Oberfläche der Rippe (9) an einer Vorderseite in der Einsatzrichtung eine geneigte Fläche (15) ist.

3. Das Wellrohrschutzelement (1) gemäß Anspruch 1 oder 2, wobei zumindest ein Abschnitt in einer Umfangsrichtung des Hauptkörpers (7) mit einem teilenden Abschnitt (17) versehen ist der konfiguriert ist, um den Hauptkörper (7) in der Umfangsrichtung zu teilen.

## Revendications

1. Élément de protection de tuyau ondulé (1) comprenant :
un corps principal (7) de forme tubulaire configuré pour être disposé sur une circonférence intérieure d'une partie d'extrémité d'un tuyau ondulé (5), le tuyau ondulé (5) présentant une pluralité de parties d'arête (3) disposée le long d'une direction longitudinale du tuyau ondulé (5) ;
au moins une nervure (9) sur une circonférence extérieure du corps principal (7) configurée pour être disposée à l'intérieur du tuyau ondulé (5) et configurée pour entrer en contact avec une partie d'arête correspondante (3) de la pluralité de parties d'arête (3) sur un intérieur de la partie d'arête correspondante (3) dans une direction de retrait du corps principal (7) par rapport au tuyau ondulé (5) ; et
une butée (11) sur une circonférence extérieure d'une partie d'extrémité dans une direction longitudinale du corps principal (7) présentant un diamètre extérieur défini pour être supérieur ou égal à un diamètre extérieur de la partie d'arête (3) et configurée pour être disposée pour être orientée vers une surface d'extrémité dans la direction longitudinale du tuyau ondulé (5) dans une direction d'insertion du corps principal (7) dans le tuyau ondulé (5), dans lequel
un intervalle (L1) entre la butée (11) et une nervure (9) qui est adjacente à la butée est défini pour être supérieur à un intervalle (L2) entre des surfaces connectables (13) sur les parties d'arête (3) adjacentes l'une à l'autre, la surface connectables (13) étant une surface configurée pour entrer en contact avec la nervure (9),
dans lequel une pluralité de nervures (9) est disposée le long de la direction longitudinale du corps principal (7) .

2. L'élément de protection de tuyau ondulé (1) selon la revendication 1, dans lequel
une surface de la nervure (9) sur un côté avant de la direction d'insertion est une surface inclinée (15).

3. L'élément de protection de tuyau ondulé (1) selon la revendication 1 ou 2, dans lequel
au moins une partie dans une direction circonférentielle du corps principal (7) est dotée d'une partie de division (17) configurée pour diviser le corps principal (7) dans la direction circonférentielle.
